# EUROPÄISCHE PATENTSCHRIFT

(11) **EP 0 556 686 B1**
(45) Veröffentlichungstag und Bekanntmachung des Hinweises auf die Patenterteilung: **05.06.1996**
(21) Anmeldenummer: 93101951.7
(22) Anmeldetag: 08.02.1993
(51) Int. Cl.: G03B 17/56, G03B 17/30

(54) **Verpackung für fotografische Filme**
Package for photographic films
Emballage pour pellicules photographiques

(30) Priorität: 20.02.1992 DE 4205082
(43) Veröffentlichungstag der Anmeldung: 25.08.1993
(73) Patentinhaber: Agfa-Gevaert AG, D-51373 Leverkusen (DE)
(72) Erfinder: Roebrock, Stefan, W-5060 Bergisch-Gladbach 2 (DE); Schmitz, Gerd, W-5000 Köln 1 (DE); Lührig, Hermann, Dipl.-Ing., W-5090 Leverkusen 1 (DE)

(56) Entgegenhaltungen:
- CA-A- 1 253 089
- GB-A- 0 214 357
- NL-A- 0 294 692
- US-A- 4 964 513

## Beschreibung

Die Erfindung betrifft eine Verpackung für in übliche Patronen eingespulte Kleinbildfilme (Film Nr. 135).

Kleinbildfilme befinden sich in zylindrischen Patronen, die einen Durchmesser von etwa 2,5 cm haben. Über den kreisrunden Querschnitt hinaus ragt das Patronenmaul. An dieser Stelle mißt die Patrone etwa 3 cm. Üblicherweise werden diese Filmpatronen in sogenannten Umbüchsen verpackt, die aus zwei Teilen, einer im wesentlichen zylindrischen, mit einem Boden versehenen Dose und einem dazu passenden Deckel, bestehen, wobei die Dose eine lichte Weite hat, die geringfügig größer als 3 cm ist.

Üblicherweise werden solche Umbüchsen aus Kunststoff gefertigt, der schwarz eingefärbt sein kann, um den in der Patrone befindlichen lichtempfindlichen Film vor Licht zu schützen.

Die Dose ist meist aus einem mehr steifen und der Deckel meist aus einem mehr flexiblen Kunststoff hergestellt. Damit wird erreicht, daß der Deckel gut schließt und der Inhalt der Dose gegen den Zutritt von Feuchtigkeit geschützt ist.

Diese die Filmpatrone enthaltende Kunststoffdose wird ihrerseits in eine quaderförmioe Faltschachtel gepackt, die einen Originalverschluß aufweist. Unter Originalverschluß wird dabei und im weiteren Verlauf der Beschreibung ein Verschluß verstanden, der beim ersten Öffnen erkennbar verändert wird, beispielsweise beschädigt, so daß der Kunde bei unverändertem, unbeschädigtem Verschluß die Sicherheit hat, daß das innenliegende Produkt das Originalprodukt ist. Ein solcher Originalverschluß schließt nicht aus, daß der Behälter wieder verschlossen werden kann.

Der Nachteil solcher Verpackungen ist, daß die Faltschachtel nach Entnahme des Films Abfall ist, zusätzlichen Fertigungsaufwand erfordert, durch ihre Bedrukkung mit Produktinformationen erhebliche Kosten verursacht, zum Produktschutz keinen Beitrag leistet und das Volumen des Produktes vergrößert.

Es hat daher nicht an Versuchen gefehlt, auf solche Faltschachteln zu verzichten. So beschreibt US-PS 4 964 513 eine kartonlose wiederverwertbarte Verpackung zur schützenden Verpackung eines fotografischen Filmes, bestehend aus einem Kunststoffbehälter und einem dazu passenden Kunststoffverschluß und Kunststoffetiketten, die Produktinformationen enthalten und deren Kunststoff mit dem Kunststoff des Behälters und des Verschlusses gemeinsam wiederverwertbar ist. Diese Etiketten sind sehr aufwendig zweilagig gestaltet, um die notwendigen Produktinformationen auf dem gegenüber der Faltschachtel geringeren Platz unterzubringen. Auch über den Verschluß ist ein Etikett geklebt, das seitliche Laschen aufweist, die über den Verschluß hinaus bis auf den Behälter reichen und über die das zweilagige Behälteretikett geklebt ist. Damit wird gewährleistet, daß beim Öffnen des Verschlusses die Laschen zerrissen werden, wodurch das erstmalige Öffnen des Behälters erkennbar wird.

Aus CA-A-1 253 089 ist ein zylindrischer Behälter bekannt in dem übereinander mehrere Getränkedosen gestapelt werden können. Da sich leere von vollen Getränkedosen leicht am Gewicht unterscheiden lassen, sind keine Mittel vorgesehen, die eine Unterscheidung von unterschiedlichen, aber gewichtsgleichen Dosen sicher gestatten.

Aufgabe der Erfindung ist, eine Verpackung zu schaffen, die keine Faltschachtel benötigt und dennoch genügend Platz für die Produktinformation aufweist, ohne auf komplizierte Lösungen wie in der o.g. US-PS 4 964 513 angewiesen zu sein, wenigstens zwei Kleinbildfilmpatronen aufnehmen kann und Mittel aufweist, mit denen zwischen belichteten und unbelichteten Filmen in den gleichen Verpackungen unterschieden werden kann.

Diese Aufgabe wird mit einer Verpackung gemäß Anspruch 1 gelöst.

Insbesondere wird die Länge des Behälters so gewählt, daß er übereinander 2 bis 8, vorzugsweise 3 bis 6 Filme Nr. 135 aufnehmen kann.

Behälter, die mehr als einen Film Nr. 135 aufnehmen sollen, sind bisher nicht vorgeschlagen worden. Die Verlängerung einer üblichen Dose mit Boden und nur einem Verschluß auf eine Länge, die 2 oder mehr Filme aufnehmen kann, wäre gegenüber der erfindungsgemäßen Lösung nachteilig, da man, um an die unteren, noch nicht belichteten Filme heranzukommen, alle darüber befindlichen Filme zuerst entnehmen muß. Dabei kann es leicht zu Verwechslungen unbelichteter mit belichteten Filmen kommen.

Die erfindungsgemäße Verpackung enthält neben den erforderlichen Produktinformationen vorzugsweise Hinweise, den Behälter zur Entnahme eines unbelichteten Filmes an der einen Seite zu öffnen (als "oben" bezeichnet) und belichtete Filme an der anderen Seite (als "unten" bezeichnet) wieder hineinzustecken, um sie vor Licht, Feuchtigkeit oder Beschädigung so lange zu schützen, bis sie zur Verarbeitung gegeben werden. Diese Hinweise können auf dem Behälter, auf dem Etikett oder auf den Verschlüssen mehrfach angebracht sein. Beispielsweise kann der Behälter schon bei der Herstellung durch Spritzgießen mit entsprechenden Merkmalen versehen werden. Es können auch verschiedenfarbige Verschlüsse verwendet werden, z.B. grün zum Entnehmen und rot zum Zurücklegen des Films.

Da üblicherweise beim Zurückspulen der Film vollständig in die Patrone eingespult wird, ist eine Verwechselung unbelichteter Filme mit bereits belichteten Filmen leicht zu vermeiden.

Diese Verwechselung wird mit der erfindungsgemäß einzulegenden Scheibe, z.B. aus Kunststoff oder Papier vermieden.
Werden nun oben unbelichtete Filme entnommen und unten belichtete Filme eingelegt, so verschiebt sich die Scheibe entsprechend, bis sie nach Entnahme des letzten unbelichteten Films sichtbar wird. Diese Scheibe kann zusätzlich mit einem Aufdruck, wie "Belichtet" oder "Exposed"; versehen sein.

Der Behälter kann aus lichtdichtem Material, aber auch aus transparentem Material bestehen. Ist der Behälter aus lichtdichtem Material, wird das Etikett außen aufgebracht. Ist der Behälter aus transparentem Material, kann die Produktinformation sich auf einem Blatt befinden, das lose so in den Behälter eingelegt ist, daß es an der Innenwand des Behälters anliegt.

Die Produktinformation kann dabei ein rückseitig schwarz bedrucktes Papier sein, so daß auch bei der transparenten Dose ausreichend Lichtschutz gegeben ist. Die Breite des Blattes muß dazu wenigstens so groß wie der Innenumfang der Dose sein. Die Blattbreite kann aber auch größer sein, falls dies für die unterzubringende Information erforderlich ist.

Die kreisförmigen Öffnungen des Behälters und die Verschlüsse sind in bekannter Weise so gestaltet, daß der Behälter wasserdampfdicht geschlossen werden kann, z.B. sind die Öffnungen des Behälters als Wulst mit geringfügig vergrößerter Wandstärke als die übrige Behälterwand und die Verschlüsse als Stülpdeckel ausgebildet.

Die Stülpdeckel haben dabei meist einen größeren Außendurchmesser als der Behälter. Der Behälter kann aber auch so ausgebildet sein, daß Verschluß und Behälter den gleichen Außendurchmesser aufweisen. Solche Verpackungen sind besonders leicht zu stapeln. Die Verschlüsse sind bevorzugt aus lichtdichtem Material hergestellt.

Vorzugsweise erhält die Dose einen Originalitätsverschluß; zum Beispiel kann die Dose mit einem Sleeve, d.h. mit einer schrumpffähigen Folie ganz oder teilweise umhüllt werden, die nach dem Aufbringen geschrumpft wird und dadurch so eng an Dose und Verschluß anliegt, daß sie beim ersten Abnehmen eines der Verschlüsse zerstört wird.

Um die Wiederverwertung der gesamten Verpackung zu erleichtern, können alle Teile der Verpackung aus dem selben Material hergestellt werden. Dieses Material ist insbesondere Polypropylen oder Polyethylen.

Die einzelnen Teile der Verpackung können aber auch getrennt wiederverwertet werden, da sie leicht sortiert werden können. Dabei liefert der aus transparentem, also nicht pigmentiertem Material, insbesondere Kunststoff, bestehende Behälter ein besonders hochwertiges Recyclat. In diesem Fall kann das Blatt mit den Produktinformationen aus Papier gefertigt sein. Es sollte jedoch vor der Wiederverwertung aus dem leeren Behälter herausgenommen werden.

Die Figur zeigt eine Ausführungsform der erfindungsgemäßen Verpackung.

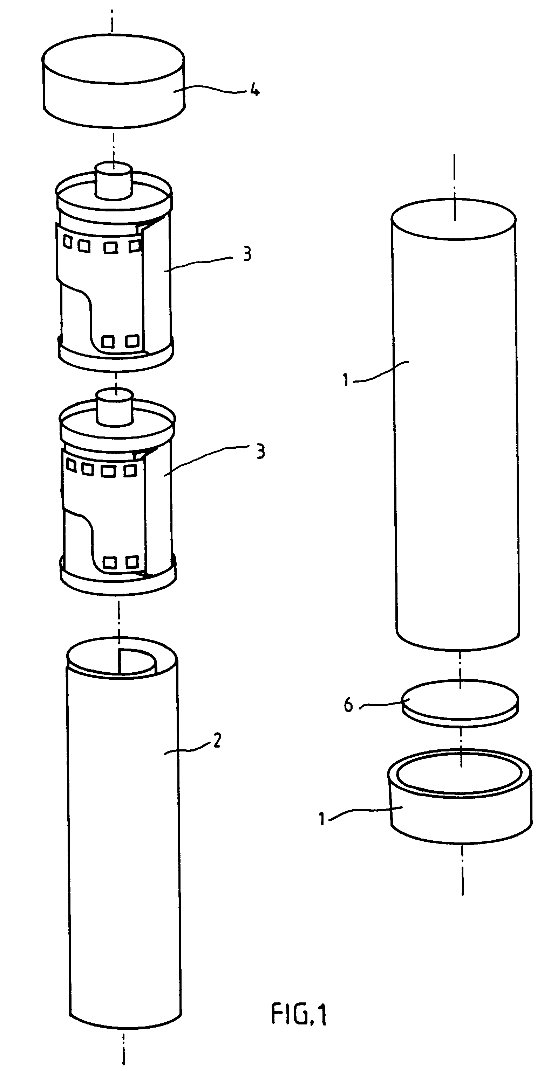

- Fig. 1: ist eine Explosionszeichnung einer Verpackung, bei der die Verschlüsse einen größeren Außendurchmesser haben als der Behälter.

In Fig. 1 bezeichnet (1) den Behälter, (2) ein mit Produktinformationen versehenes Blatt, das sich an die Innenwand des Behälters anlegt, (3) übliche fotografische Kleinbildfilme (in Patronen), (4) und (5) die Verschlüsse und (6) eine unter dem untersten Film eingelegte Scheibe.

Die Verpackung nach Fig. 1 hat den Vorteil, daß der Behälter in einfacher Weise durch Spritzgießen herstellbar ist. Sie hat weiterhin den Vorteil, daß die für die derzeit benutzten Umbüchsen üblichen Verschlüsse verwendet werden können, das heißt, für die Verschlüsse keine neuen Spritzgießwerkzeuge gebaut werden müssen.

Die erfindungsgemäße Verpackung ist insbesondere für solche Verbraucher gedacht, die in kurzer Zeit mehrere Filme verbrauchen, beispielsweise auf einer Urlaubsreise oder für professionelle Zwecke.

Werden die Filme in der erfindungsgemäßen Verpackung gemeinsam mit der Kamera und weiterem Zubehör in der Fototasche verwahrt, ergibt sich durch die Größe der Verpakkung ein leichterer Zugriff, da zeitraubendes Suchen entfällt. Weiterhin wird viel sicherer vermieden, belichtete Filme mit unbelichteten Filmen zu verwechseln, ohne daß die belichteten Filme gesondert gekennzeichnet werden müßten.

## Patentansprüche

1. Verpackung mit in übliche Eilmpatronen eingespulten Kleinbildfilmen und einem oben und unten offenen, im wesentlichen zylindrischen Behälter (1) und zu den Öffnungen passenden Verschlüssen (4, 5), dessen Länge und lichte Weite ausreichend sind, wenigstens zwei solcher Kleinbildfilmpatronen übereinander aufzunehmenden, und der ein Etikett (2) aufweist, das die notwendigen Produktinformationen enthält, wobei unter dem untersten Film in dem Behälter eine Scheibe (6) plaziert ist, die beim Entnehmen unbelichteter Filmpatronen oben und Einlegen belichteter Filmpatronen unten im Laufe des Filmverbrauchs in dem Behälter nach oben wandert.

2. Verpackung nach Anspruch 1, wobei die Länge des Behälters ausreichend ist, 2 bis 8, vorzugsweise 3 bis 6 Kleinbildfilmpatronen (3) aufzunehmen.

3. Verpackung nach Anspruch 1, wobei der Behälter (1) und die Verschlüsse (4, 5) denselben Außendurchmesser haben.

4. Verpackung nach Anspruch 1, wobei der Behälter (1) aus transparentem Material besteht und das Etikett (2) ein Blatt mit den zur Kennzeichnung des Produktes erforderlichen Informationen ist, das lose so in den Behälter eingelegt ist, daß es an der Innenwand des Behälters anliegt.

5. Verpackung nach Anspruch 4, wobei das Blatt die Innenwand vollständig bedeckt.

6. Verpackung nach Anspruch 4, wobei das Blatt und die Verschlüsse des Behälters aus lichtdichtem Material hergestellt sind.

7. Verpackung nach Anspruch 1, wobei alle Teile der Verpackung aus dem selben Material hergestellt werden.

8. Verpackung nach Anspruch 7, wobei das verwendete Material Polypropylen oder Polyethylen ist.

9. Verpackung nach Anspruch 1, wobei sie einen Originalitätsverschluß aufweist, der beim ersten Öffnen erkennbar verändert wird.

## Claims

1. A packaging comprising miniature films wound in standard film cartridges and a substantially cylindrical container (1), which is open at the top and the bottom, and lids (4, 5) which fit the openings, the length and internal width of which are sufficient to accommodate at least two such miniature film cartridges one above another, and which possesses a label (2) bearing the necessary product information, wherein a disc (6) is positioned beneath the lowest film in the container, which disc moves upwards in the container during the course of the consumption of the film as unexposed film cartridges are removed from the top and exposed film cartridges are inserted at the bottom.

2. A packaging according to Claim 1, wherein the length of the container is sufficient to accommodate 2 to 8, preferably 3 to 6 miniature film cartridges (3).

3. A packaging according to Claim 1, wherein the container (1) and the lids (4, 5) possess the same outer diameter.

4. A packaging as claimed in Claim 1, wherein the container (1) consists of transparent material and the label (2) is a sheet which bears the information required to identify the product and which is loosely inserted into the container in such manner that it rests against the inner wall of the container.

5. A packaging according to Claim 4, wherein the sheet completely covers the inner wall.

6. A packaging according to Claim 4, wherein the sheet and the lids of the container are produced from material impervious to light.

7. A packaging according to Claim 1, wherein all the parts of the packaging are produced from the same material.

8. A packaging according to Claim 7, wherein the material which is used is polypropylene or polyethylene.

9. A packaging according to Claim 1, wherein the packaging possesses an originality seal which is altered in a detectable manner on the occasion of the first opening.

## Revendications

1. Emballage comportant des pellicules de petit format enroulées dans des cartouches de pellicule habituelles, et un récipient (1) sensiblement cylindrique et ouvert en haut et en bas, et des fermetures (4, 5) adaptées aux ouvertures, dont la longueur et la largeur intérieure suffisent pour recevoir au moins deux cartouches de pellicule de petit format de ce type l'une au-dessus de l'autre, et qui présente une étiquette (2) qui contient les informations nécessaires sur le produit, au-dessous de la pellicule inférieure étant placé dans le récipient un disque, qui se déplace vers le haut dans le récipient pendant l'utilisation des pellicules lorsque les cartouches de pellicule non exposée sont enlevées en haut et que les cartouches de pellicule exposée sont remises en bas.

2. Emballage selon la revendication 1, dans lequel la longueur du récipient est suffisante pour recevoir 2 à 8, de préférence 3 à 6 cartouches de pellicule de petit format (3).

3. Emballage selon la revendication 1, dans lequel le récipient (1) et les fermetures (4, 5) présentent le même diamètre extérieur.

4. Emballage selon la revendication 1, dans lequel le récipient (1) est constitué en un matériau transparent, et l'étiquette (2) est une feuille avec les informations nécessaires pour caractériser le produit, qui est posée de façon lâche dans le récipient, de sorte qu'elle s'appuie contre la paroi intérieure du récipient.

5. Emballage selon la revendication 4, dans lequel la feuille recouvre entièrement la paroi intérieure.

6. Emballage selon la revendication 4, dans lequel la feuille et les fermetures du récipient sont fabriquées en un matériau opaque à la lumière.

7. Emballage selon la revendication 1, dans lequel toutes les parties de l'emballage sont fabriquées avec le même matériau.

8. Emballage selon la revendication 7, dans lequel le matériau utilisé est du polypropylène ou du polyéthylène.

9. Emballage selon la revendication 1, qui présente une fermeture de garantie qui est modifiée de façon remarquable lors de la première ouverture.
